# EUROPÄISCHE PATENTANMELDUNG

(11) **EP 3 401 132 A1**
(43) Veröffentlichungstag der Anmeldung: **14.11.2018**
(21) Anmeldenummer: 18169428.2
(22) Anmeldetag: 26.04.2018
(51) Int. Cl.: B60G 11/26, B60G 11/30, B60G 21/06, B60G 21/073

(54) **FEDERBEIN FÜR EIN FAHRZEUGFEDERUNGSSYSTEM**

(30) Priorität: 08.05.2017 DE 102017207690
(71) Anmelder: Deere & Company, Moline, IL 61265 (US)
(72) Erfinder: Hahn, Klaus, 68163 Mannheim (DE); Klittich, Mathias, 68163 Mannheim (DE); von Holst, Christian, 68163 Mannheim (DE); Wolf, Guenther, 68163 Mannheim (DE)
(74) Vertreter: Dehnhardt, Florian Christopher

(57) **Zusammenfassung**

Federbein (10) für ein Fahrzeugfederungssystem, mit einem Federzylinder (12) sowie einem in dem Federzylinder (12) längsverschiebbar gelagerten Federkolben (14), wobei der Federkolben (14) eine von dem Federzylinder (12) gebildete Zylinderkammer (16) in eine erste und zweite äußere Arbeitskammer (18, 20) unterteilt. Hierbei weist der Federzylinder (12) einen Innenstößel (22) auf, der eine von dem Federkolben (14) gebildete Kolbenkammer (24) in eine erste und zweite innere Arbeitskammer (26, 28) unterteilt, wobei die erste innere Arbeitskammer (26, 28) zugleich durch Unterteilung der Zylinderkammer (16) mittels des Federkolbens (14) gebildet ist.

## Beschreibung

Die Erfindung betrifft ein Federbein für ein Fahrzeugfederungssystem, mit einem Federzylinder sowie einem in dem Federzylinder längsverschiebbar gelagerten Federkolben, wobei der Federkolben eine von dem Federzylinder gebildete Zylinderkammer in eine erste und zweite äußere Arbeitskammer unterteilt.

Ein derartiges Federbein in Gestalt eines Radfederzylinders geht beispielsweise aus der DE 198 53 876 A1 hervor, wobei diesem zur Bereitstellung einer Wankstabilisierungsfunktion ein Doppelkammerzylinder zur Seite gestellt ist. Aufgrund der baulich getrennten Ausführung von Radfederzylinder und Doppelkammerzylinder ist der Bauraumbedarf der bekannten Anordnung entsprechend groß.

Insofern ist es Aufgabe der vorliegenden Erfindung, ein Federbein der eingangs genannten Art zur platzsparenden Verwendung in einem wankstabilisierenden Fahrzeugfederungssystem weiterzubilden.

Diese Aufgabe wird durch ein Federbein mit den Merkmalen des Patentanspruchs 1 gelöst.

Das Federbein für ein Fahrzeugfederungssystem umfasst einen Federzylinder sowie einen in dem Federzylinder längsverschiebbar gelagerten Federkolben, wobei der Federkolben eine von dem Federzylinder gebildete Zylinderkammer in eine erste und zweite äußere Arbeitskammer unterteilt. Erfindungsgemäß weist der Federzylinder einen Innenstößel auf, der eine von dem Federkolben gebildete Kolbenkammer in eine erste und zweite innere Arbeitskammer unterteilt, wobei die erste innere Arbeitskammer zugleich durch Unterteilung der Zylinderkammer mittels des Federkolbens gebildet ist.

Aufgrund der dadurch geschaffenen ineinander verschachtelten Anordnung der Arbeitskammern zeichnet sich das erfindungsgemäße Federbein durch einen besonders kompakten Aufbau aus.

Vorteilhafte Weiterbildungen des erfindungsgemäßen Federbeins gehen aus den Unteransprüchen hervor.

Vorzugsweise kommunizieren die beiden inneren Arbeitskammern über in dem Innenstößel ausgebildete Passagen mit einem jeweiligen Druckanschlussstück an einer Außenseite des Federzylinders. Das Druckanschlussstück ist beispielsweise in Gestalt einer Gewindearmatur in ein an dem Federzylinder ausgebildetes und in die jeweilige innere Arbeitskammer mündendes Durchgangsgewinde eingeschraubt.

Des Weiteren besteht die Möglichkeit, dass der Federkolben gemeinsam mit dem Federzylinder sowie dem Innenstößel einen inneren und äußeren Ringraum ausbildet. Genauer gesagt kann es sich bei dem inneren Ringraum um die erste innere Arbeitskammer und bei dem äußeren Ringraum um die erste äußere Arbeitskammer handeln. Insbesondere kann der äußere Ringraum den inneren Ringraum konzentrisch umgeben, was zu einem noch kompakteren Aufbau des Federbeins führt.

Hierbei kann vorgesehen sein, dass der Federkolben im Bereich eines Kolbenkopfs eine zentrale Öffnung aufweist, durch die sich eine von dem Innenstößel umfasste vollzylindrische Stößelbasis hindurcherstreckt.

Zusätzlich oder alternativ kann der Federzylinder einen zwischen einem stirnseitigen Zylinderdeckel und einem Stößelkopf des Innenstößels verlaufenden Ringspalt aufweisen, durch den sich eine von dem Federkolben umfasste hohlzylindrische Kolbenbasis hindurcherstreckt.

Die vollzylindrische Stößelbasis bzw. die hohlzylindrische Kolbenbasis ist in diesem Fall flüssigkeitsdicht innerhalb der zentralen Öffnung bzw. des Ringspalts längsverschiebbar gelagert.

Dabei besteht die Möglichkeit, dass der Innenstößel mittig im Bereich eines Zylinderbodens hervorspringt, wobei die von dem Innenstößel umfasste Stößelbasis insbesondere einstückiger Bestandteil des Federzylinders sein kann. Die erste äußere Arbeitskammer ist in einem solchen Fall als weiterer äußerer Ringraum ausgebildet.

Die beiden äußeren Arbeitskammern können über in einer Zylinderwandung ausgebildete Passagen mit einem jeweiligen Druckanschlussstück an einer Außenseite des Federzylinders kommunizieren. Das Druckanschlussstück kann auch hier in Gestalt einer Gewindearmatur in ein an dem Federzylinder ausgebildetes und in die jeweilige äußere Arbeitskammer mündendes Durchgangsgewinde eingeschraubt sein.
Im Hinblick auf einen vereinfachten Zusammenbau des Federbeins kann der Federzylinder und/oder der Federkolben mehrteilig ausgebildet sein. So kann einerseits der Kolbenkopf abnehmbar am Federkolben bzw. der von diesem umfassten Kolbenbasis und andererseits der Stößelkopf abnehmbar an der Stößelbasis angebracht sein. Zu diesem Zweck kann zwischen den betreffenden Teilen eine lösbare Befestigung in Form einer Verschraubung oder dergleichen vorgesehen sein.

Das Federbein ist beispielsweise Bestandteil eines Fahrzeugfederungssystems eines landwirtschaftlichen Traktors. In diesem Fall umfasst das Fahrzeugfederungssystem rechte und linke Federbeine erfindungsgemäßer Bauart, wobei die erste innere Arbeitskammer des linken Federbeins mit der zweiten inneren Arbeitskammer des rechten Federbeins über eine erste Kreuzleitung und die erste innere Arbeitskammer des rechten Federbeins mit der zweiten inneren Arbeitskammer des linken Federbeins über eine zweite Kreuzleitung kommuniziert. Hierbei ist jede der beiden Kreuzleitungen mit einem separaten Blasenspeicher verbunden.

Das aufgrund der Kreuzverschaltung der inneren Arbeitskammern gebildete (in sich fluidisch abgeschlossene) hydraulische System führt zu einer Wankstabilisierung eines mittels der beiden Federbeine gegenüber zugehörigen Radträgern bzw. einer Fahrzeugachse abgestützten Fahrzeugaufbaus. Neigt sich der Fahrzeugaufbau beispielsweise nach links, so führt dies zu einer Einfederbewegung des linken Federbeins, verbunden mit einer entsprechenden Ausfederbewegung des rechten Federbeins. Hierbei wird Hydraulikflüssigkeit aus der zweiten inneren Arbeitskammer des linken Federbeins bzw. der ersten inneren Arbeitskammer des rechten Federbeins als entsprechender Ausgleichsvolumenstrom in Richtung der zweiten inneren Arbeitskammer des rechten Federbeins bzw. der ersten inneren Arbeitskammer des linken Federbeins verdrängt. Im Ergebnis führt dies zu einer gegenseitigen Blockierung der beiden Federbeine. Eine seitliche Wankbewegung des Fahrzeugaufbaus wird auf diese Weise effektiv unterdrückt. Die beiden Blasenspeicher dienen hierbei der Kompensation der für die ersten und zweiten inneren Arbeitskammern typischerweise unterschiedlichen Verdrängungsvolumina wie auch der Erzielung eines definierten Dämpfungsverhaltens.

Mit anderen Worten wirkt die Kreuzverschaltung der beiden Federbeine gegenphasigen Bewegungen des Fahrzeugaufbaus entgegen, gleichphasige hingegen werden zugelassen, sodass die "gewöhnliche" und mittels der äußeren Arbeitskammern ausgeführte Federungsfunktion des Fahrzeugfederungssystems nicht beeinträchtigt ist. Hierzu sind die äußeren Arbeitskammern typischerweise mit einer Anordnung mehrerer weiterer Blasenspeicher verbunden, wobei über zugehörige Zuleitungen eine Veränderung der Lage des Fahrzeugaufbaus durch Anpassung eines in den äußeren Arbeitskammern herrschenden Vorspanndrucks mittels eines Hydrauliksystems des landwirtschaftlichen Traktors möglich ist. Insofern sei unter anderem auf die für den Fall einer gefederten Starrachse eines landwirtschaftlichen Traktors beschriebene Anordnung gemäß DE 196 43 263 A1 hingewiesen.

Das erfindungsgemäße Federbein wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein schematisch dargestelltes Ausführungsbeispiel des erfindungsgemäßen Federbeins, und
- Fig. 2: ein Fahrzeugfederungssystem eines landwirtschaftlichen Traktors mit einem rechten und linken Federbein gemäß Fig. 1.

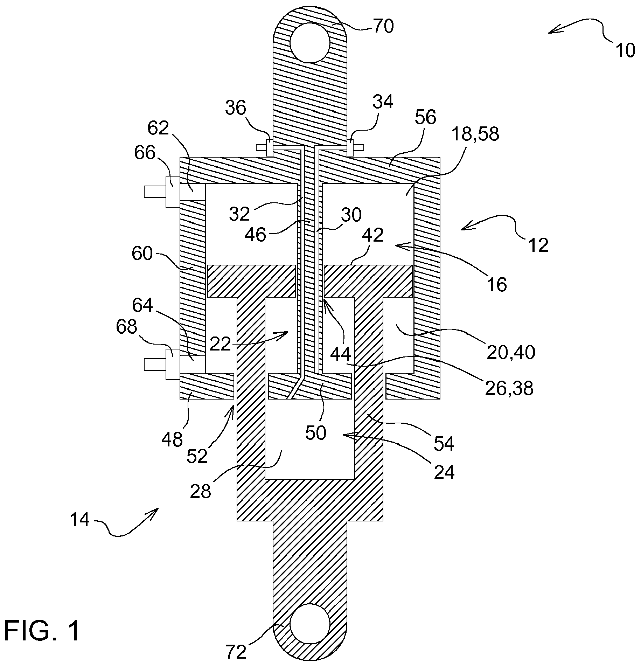

Fig. 1 zeigt eine schematische Darstellung des erfindungsgemäßen Federbeins im Schnitt.

Das Federbein 10 umfasst einen Federzylinder 12 sowie einen in dem Federzylinder 12 längsverschiebbar gelagerten Federkolben 14. Der Federkolben 14 unterteilt eine von dem Federzylinder 12 gebildete Zylinderkammer 16 in eine erste und zweite äußere Arbeitskammer 18, 20. Des Weiteren weist der Federzylinder 12 einen Innenstößel 22 auf, der eine von dem Federkolben 14 gebildete Kolbenkammer 24 in eine erste und zweite innere Arbeitskammer 26, 28 unterteilt, wobei die erste innere Arbeitskammer 26 zugleich durch Unterteilung der Zylinderkammer 16 mittels des Federkolbens 14 gebildet ist.

Die beiden inneren Arbeitskammern 26, 28 kommunizieren über in dem Innenstößel 22 ausgebildete erste und zweite Passagen 30, 32 mit einem ersten und zweiten Druckanschlussstück 34, 36 an einer Außenseite des Federzylinders 12. Das erste und zweite Druckanschlussstück 34, 36 ist in ein an dem Federzylinder 12 ausgebildetes und in die jeweilige innere Arbeitskammer 26, 28 mündendes Durchgangsgewinde eingeschraubt.

Der Federkolben 14 bildet gemeinsam mit dem Federzylinder 12 sowie dem Innenstößel 22 einen inneren und äußeren Ringraum 38, 40 aus. Genauer gesagt handelt es sich bei dem inneren Ringraum 38 um die erste innere Arbeitskammer 26 und bei dem äußeren Ringraum 40 um die erste äußere Arbeitskammer 18, wobei der äußere Ringraum 40 den inneren Ringraum 38 konzentrisch umgibt.

Beispielsgemäß weist der Federkolben 14 im Bereich eines Kolbenkopfs 42 eine zentrale Öffnung 44 in Gestalt einer Durchgangsbohrung auf, durch die sich eine von dem Innenstößel 22 umfasste vollzylindrische Stößelbasis 46 hindurcherstreckt. Ferner weist der Federzylinder 12 einen zwischen einem stirnseitigen Zylinderdeckel 48 und einem Stößelkopf 50 des Innenstößels 22 verlaufenden Ringspalt 52 auf, durch den sich eine von dem Federkolben 14 umfasste hohlzylindrische Kolbenbasis 54 hindurcherstreckt. Die vollzylindrische Stößelbasis 46 bzw. die hohlzylindrische Kolbenbasis 54 ist hierbei flüssigkeitsdicht innerhalb der zentralen Öffnung 44 bzw. des Ringspalts 52 längsverschiebbar gelagert.

Gemäß Fig. 1 springt der Innenstößel 22 mittig im Bereich eines Zylinderbodens 56 hervor, wobei die von diesem umfasste Stößelbasis 46 einstückiger Bestandteil des Federzylinders 12 ist. Die erste äußere Arbeitskammer 18 ist daher als weiterer äußerer Ringraum 58 ausgebildet.
Die beiden äußeren Arbeitskammern 18, 20 kommunizieren über in einer Zylinderwandung 60 ausgebildete dritte und vierte Passagen 62, 64 mit einem dritten und vierten Druckanschlussstück 66, 68 an einer Außenseite des Federzylinders 12. Das dritte und vierte Druckanschlussstück 66, 68 ist auch hier in Gestalt einer Gewindearmatur in ein an dem Federzylinder 12 ausgebildetes und in die jeweilige äußere Arbeitskammer 18, 20 mündendes Durchgangsgewinde eingeschraubt.

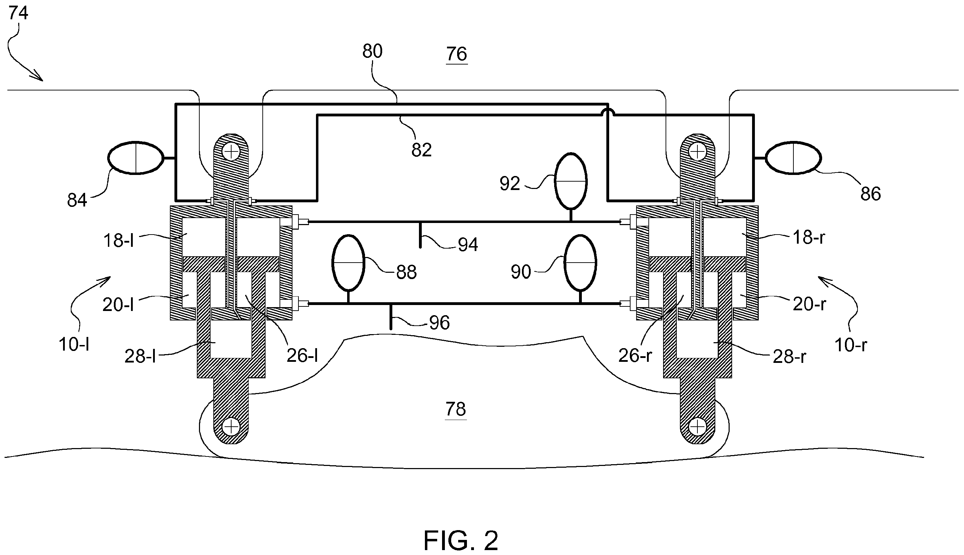

Sowohl der Federzylinder 12 wie auch der Federkolben 14 sind als Stahlgussteil hergestellt, wobei jede der im Bereich der zentralen Öffnung 44 bzw. des Ringspalts 52 gebildeten flüssigkeitsdichten Passungen spanabhebend nachgearbeitet ist. An entgegengesetzten Enden des Federbeins 10 befinden sich erste und zweite Befestigungsaugen 70, 72, die eine Anbringung zwischen einem Radträger bzw. einer Fahrzeugachse und einem Fahrzeugaufbau ermöglichen (siehe hierzu Fig. 2).

Im Hinblick auf einen vereinfachten Zusammenbau des Federbeins 10 ist der Federzylinder 12 und/oder der Federkolben 14 mehrteilig ausgebildet. So ist einerseits der Kolbenkopf 42 abnehmbar am Federkolben 14 bzw. der von diesem umfassten Kolbenbasis 54 und andererseits der Stößelkopf 50 abnehmbar an der Stößelbasis 46 angebracht. Zu diesem Zweck ist zwischen den betreffenden Teilen eine (nicht dargestellte) lösbare Befestigung in Form einer Verschraubung oder dergleichen vorgesehen.

Fig. 2 zeigt ein Fahrzeugfederungssystem eines landwirtschaftlichen Traktors mit einem rechten und linken Federbein gemäß Fig. 1, wobei die zugehörigen Bezugszeichen ihrer jeweiligen Seitenzuordnung entsprechend mit "r" (rechts) bzw. "l" (links) indiziert sind.

Beispielsgemäß dienen im Falle des in Fig. 2 dargestellten Fahrzeugfederungssystems 74 die beiden identisch aufgebauten Federbeine 10-r, 10-l der Abstützung eines Fahrzeugaufbaus 74 gegenüber einer gefederten Starrachse 78 des landwirtschaftlichen Traktors. Bei der Starrachse 78 handelt es sich vorliegend um eine pendelnd aufgehängte Vorderachse. Alternativ können die Federbeine 10-r, 10-l auch im Verbund mit einer Einzelradfederung zwischen einem jeweiligen Radträger und dem Fahrzeugaufbau 74 angeordnet sein.

Wie sich Fig. 2 entnehmen lässt, kommuniziert die erste innere Arbeitskammer 26-l des linken Federbeins 10-l mit der zweiten inneren Arbeitskammer 28-r des rechten Federbeins 10-r über eine erste Kreuzleitung 80 und die erste innere Arbeitskammer 26-r des rechten Federbeins 10-r mit der zweiten inneren Arbeitskammer 28-l des linken Federbeins 10-l über eine zweite Kreuzleitung 82. Jede der beiden Kreuzleitungen 80, 82 ist mit einem separaten Blasenspeicher 84, 86 verbunden. Die Blasenspeicher 84, 86 sind als stickstoffgefüllte Membranspeicher ausgebildet.

Das aufgrund der dargestellten Kreuzverschaltung der inneren Arbeitskammern 26-r, 28-r, 26-l, 28-l gebildete (in sich fluidisch abgeschlossene) hydraulische System führt zu einer Wankstabilisierung des Fahrzeugaufbaus 76. Neigt sich der Fahrzeugaufbau 76 entsprechend der beispielhaften Darstellung in Fig. 2 nach links, so führt dies zu einer Einfederbewegung des linken Federbeins 10-l, verbunden mit einer entsprechenden Ausfederbewegung des rechten Federbeins 10-r. Hierbei wird Hydraulikflüssigkeit aus der zweiten inneren Arbeitskammer 28-l des linken Federbeins 10-l bzw. der ersten inneren Arbeitskammer 26-r des rechten Federbeins 10-r als entsprechender Ausgleichsvolumenstrom in Richtung der zweiten inneren Arbeitskammer 28-r des rechten Federbeins 10-r bzw. der ersten inneren Arbeitskammer 26-l des linken Federbeins 10-l verdrängt. Im Ergebnis führt dies zu einer gegenseitigen Blockierung der beiden Federbeine 10-r, 10-l. Eine seitliche Wankbewegung des Fahrzeugaufbaus 76 wird auf diese Weise effektiv unterdrückt. Die beiden Blasenspeicher 84, 86 dienen hierbei der Kompensation der für die ersten und zweiten inneren Arbeitskammern 26-r, 28-r, 26-l, 28-l typischerweise unterschiedlichen Verdrängungsvolumina wie auch der Erzielung eines definierten Dämpfungsverhaltens.

Mit anderen Worten wirkt die Kreuzverschaltung der beiden Federbeine 10-r, 10-l gegenphasigen Bewegungen des Fahrzeugaufbaus 76 entgegen, gleichphasige hingegen werden zugelassen, sodass die "gewöhnliche" und mittels der äußeren Arbeitskammern 18-r, 20-r, 18-l, 20-l ausgeführte Federungsfunktion des Fahrzeugfederungssystems nicht beeinträchtigt ist. Zu diesem Zweck sind die äußeren Arbeitskammern 18-r, 20-r, 18-l, 20-l mit einer Anordnung mehrerer weiterer Blasenspeicher 88, 90, 92 verbunden, wobei über zugehörige Zuleitungen 94, 96 zudem eine Veränderung der Lage des Fahrzeugaufbaus 76 durch Anpassung eines in den äußeren Arbeitskammern 18-r, 20-r, 18-l, 20-l herrschenden Vorspanndrucks mittels eines nicht gezeigten Hydrauliksystems des landwirtschaftlichen Traktors möglich ist. Die weiteren Blasenspeicher 88, 90, 92 sind ebenfalls als stickstoffgefüllte Membranspeicher ausgebildet. Insoweit entspricht die Funktion des Fahrzeugfederungssystems 74 derjenigen konventioneller Anordnungen, wie sie beispielsweise aus der DE 196 43 263 A1 bekannt sind.

Der Vollständigkeit halber sei angemerkt, dass die dargestellte Verwendung des Fahrzeugfederungssystems 74 in einem landwirtschaftlichen Traktor lediglich beispielhaften Charakter hat, vielmehr ist dessen Einsatz auch in beliebigen anderen Nutzfahrzeugen vorstellbar. Daneben lässt sich die vorstehende Konfiguration auch im Zusammenhang mit einer aktiven Fahrerkabinenfederung anwenden, wobei die Federbeine in diesem Fall zwischen einer tragenden Fahrzeugstruktur und einem Rahmen einer Fahrerkabine angeordnet sind.

## Patentansprüche

1. Federbein für ein Fahrzeugfederungssystem, mit einem Federzylinder (12) sowie einem in dem Federzylinder (12) längsverschiebbar gelagerten Federkolben (14), wobei der Federkolben (14) eine von dem Federzylinder (12) gebildete Zylinderkammer (16) in eine erste und zweite äußere Arbeitskammer (18, 20) unterteilt, **dadurch gekennzeichnet, dass** der Federzylinder (12) einen Innenstößel (22) aufweist, der eine von dem Federkolben (14) gebildete Kolbenkammer (24) in eine erste und zweite innere Arbeitskammer (26, 28) unterteilt, wobei die erste innere Arbeitskammer (26) zugleich durch Unterteilung der Zylinderkammer (16) mittels des Federkolbens (14) gebildet ist.

2. Federbein nach Anspruch 1, **dadurch gekennzeichnet, dass** die beiden inneren Arbeitskammern (26, 28) über in dem Innenstößel (22) ausgebildete Passagen (30, 32) mit einem jeweiligen Druckanschlussstück (34, 36) an einer Außenseite des Federzylinders (12) kommunizieren.

3. Federbein nach wenigstens einem der vorhergehenden Ansprüche, **dadurch gekennzeichnet, dass** der Federkolben (14) gemeinsam mit dem Federzylinder (12) sowie dem Innenstößel (22) einen inneren und äußeren Ringraum (38, 40) ausbildet.

4. Federbein nach wenigstens einem der vorhergehenden Ansprüche, **dadurch gekennzeichnet, dass** der Federkolben (14) im Bereich eines Kolbenkopfs (42) eine zentrale Öffnung (44) aufweist, durch die sich eine von dem Innenstößel (22) umfasste vollzylindrische Stößelbasis (46) hindurcherstreckt.

5. Federbein nach wenigstens einem der vorhergehenden Ansprüche, **dadurch gekennzeichnet, dass** der Federzylinder (12) einen zwischen einem stirnseitigen Zylinderdeckel (48) und einem Stößelkopf (50) des Innenstößels (22) verlaufenden Ringspalt (52) aufweist, durch den sich eine von dem Federkolben (14) umfasste hohlzylindrische Kolbenbasis (54) hindurcherstreckt.

6. Federbein nach wenigstens einem der vorhergehenden Ansprüche, **dadurch gekennzeichnet, dass** der Innenstößel (22) mittig im Bereich eines Zylinderbodens (56) hervorspringt, wobei die von diesem umfasste Stößelbasis (46) insbesondere einstückiger Bestandteil des Federzylinders (12) ist.

7. Federbein nach wenigstens einem der vorhergehenden Ansprüche, **dadurch gekennzeichnet, dass** die beiden äußeren Arbeitskammern (18, 20) über in einer Zylinderwandung (60) ausgebildete Passagen (62, 64) mit einem jeweiligen Druckanschlussstück (66, 68) an einer Außenseite des Federzylinders (12) kommunizieren.

8. Federbein nach wenigstens einem der vorhergehenden Ansprüche, **dadurch gekennzeichnet, dass** der Federzylinder (12) und/oder der Federkolben (14) mehrteilig ausgebildet ist.

9. Fahrzeugfederungssystem, umfassend ein rechtes und linkes Federbein (10-r, 10-l) jeweils nach wenigstens einem der vorhergehenden Ansprüche, bei dem die erste innere Arbeitskammer (26-l) des linken Federbeins (10-l) mit der zweiten inneren Arbeitskammer (28-r) des rechten Federbeins (10-r) über eine erste Kreuzleitung (80) und die erste innere Arbeitskammer (26-r) des rechten Federbeins (10-r) mit der zweiten inneren Arbeitskammer (28-l) des linken Federbeins (10-l) über eine zweite Kreuzleitung (82) kommuniziert, wobei jede der beiden Kreuzleitungen (80, 82) mit einem separaten Blasenspeicher (84, 86) verbunden ist.

10. Nutzfahrzeug, insbesondere landwirtschaftlicher Traktor, mit einem Fahrzeugfederungssystem (74) nach Anspruch 9.
